# EUROPEAN PATENT SPECIFICATION

(11) **EP 3 719 361 B1**
(45) Date of publication and mention of the grant of the patent: **14.12.2022**
(21) Application number: 19740474.2
(22) Date of filing: 08.02.2019
(51) Int. Cl.: F16K 3/312, F16K 3/314, F16K 27/04, F16K 3/20, F16K 3/02, F16K 31/53, F16K 37/00, F16K 3/316

(54) **BLIND VALVE**
BLINDVENTIL
ROBINET À OBTURATEUR

(30) Priority: 07.02.2019 KR 20190014310
(43) Date of publication of application: 07.10.2020
(73) Proprietor: Boxy Blind Valve Co.,Ltd., Miryang-si, Gyeongsangnam-do 50449 (KR)
(72) Inventor: KIM, Jung Yeon, Dongnae-gu, Busan 47863 (KR)
(74) Representative: HGF
(86) International application number: PCT/KR2019/001564
(87) International publication number: WO 2020/162647

(56) References cited:
- KR-A- 20100 028 945
- KR-A- 20170 127 328
- KR-A- 20180 075 239
- KR-B1- 101 541 459
- KR-B1- 101 915 752
- US-A- 2 709 455
- US-A1- 2017 030 470
- US-A1- 2018 180 186

## Description

### Technical Field

The present invention relates generally to a line blind valve. More particularly, the present invention relates to a blind valve capable of: minimizing provision of gaskets for maintaining airtightness, thus making it possible to use of a gasket suitable for high temperature and cryogenic fluid and enable easy replacement thereof; eliminating provision of unnecessary components, thus simplifying an assembly structure of the valve so as to be easily disassembled and assembled; and being robust through structural characteristics of a system block, thus reducing the amount of deformation of a valve body unit and improving structural stability and durability.

### Background Art

In general, a blind valve is provided at a boundary of a pipe for a hydraulic test to close and open fluid flow of the pipe. Furthermore, in the case of connecting pipes in which different types of fluids flow, the blind valve is provided to prevent the fluids from being introduced into each other or to prevent the fluids from being mixed with each other. Usually, the blind valve is used in a gas supply pipe of chemical and petroleum refining facilities, petroleum product storage facilities, industrial facilities, in addition to a pipe of machinery industries such as steel plants, refineries, gas terminals, chemical factories.

As a technique related to such a blind valve, Korean Patent No. 10-1541459, entitled "Hermetic Blind Valve", is disclosed. The hermetic blind valve is configured such that a ring gear screwed to a rear valve body moves and pushes a seat, causing a blind plate to be pressed toward a front valve body and hermetically secured, and thus opening and closing of a pipe can be performed without disassembly. When the blind plate is distanced by rotation of the ring gear, a space is formed between the ring gear and the seat. To seal such a space, a gasket is provided in the seat.

However, the hermetic blind valve according to the related art is problematic in that a structure for moving the blind plate may be complicated, and it may be difficult to visually identify the gasket provided in the seat.

In an effort to solve such a problem, Korean Patent No. 10-1915752, entitled "Line Blind Valve", disclosed a configuration in which a second nozzle part is pressed toward a blind plate by rotation of a ring gear and is hermetically sealed. However, the line blind valve according to the related art is problematic in that due to the fact that front and rear valve bodies are welded together, it may be impossible to disassemble and repair the valve when internal defects or abnormalities occur during use. The line blind valve according to the related art is also problematic in that thermal deformation of the valve bodies due to welding may occur.

US 2018/0180186 discloses a line blind valve including a valve body formed with an opening at each of a front side and a rear side thereof; a fixed pipe fixedly provided on the front side to be in a shape inserted in the opening of the front side; a moving pipe provided on the rear side by being inserted into the opening of the rear side, and movable in a direction of a pipeline, with threads formed on an outer circumferential surface thereof; a blind provided between the fixed pipe and the moving pipe to open or block the pipeline by moving upward or downward; and a drive assembly including a gear set engaged with the threads and configured to press the moving pipe toward the blind to sealingly fix the moving pipe, and a drive unit coupled to the gear set to control a rotation direction of the gear set.

### Disclosure

### Technical Problem

Accordingly, the present invention has been made keeping in mind the above problems occurring in the related art, and an objective of the present invention is to provide a line blind valve capable of simplifying an assembly structure by eliminating provision of unnecessary components, while being capable of reducing the amount of deformation, providing a wide operating temperature and pressure range, and improving structural stability through provision of a system block.

Another objective of the present invention is to provide a blind valve, in which a blind plate is efficiently moved without causing interference of a gasket.

Still another objective of the present invention is to provide a blind valve, in which a front valve body and a rear valve body are fastened together by using a bolt, whereby when internal defects or abnormalities occur during use of the valve, only a defective part is replaced or repaired through disassembly of the valve.

Yet another objective of the present invention is to provide a line blind valve, capable of enabling an operator to quickly and safely close a pipe without using a work tool.

### Technical Solution

In order to accomplish the above objectives, according to an aspect of the present invention, there is provided a line blind valve, including: a valve body unit including a front valve body and a rear valve body that are disposed between pipes at front and rear locations spaced apart from each other at a predetermined interval and are fastened together by using a bolt; a first nozzle part fastened to the front valve body; a second nozzle part inserted into the rear valve body by passing therethrough and having a spiral protrusion formed on an outer circumferential surface thereof, the second nozzle part being configured be movable frontward and rearward in an axial direction; a blind plate disposed between the first and second nozzle parts and configured to open and close the pipes by horizontal movement thereof, the blind plate having a gasket provided in a surface thereof that is in contact with each of the first and second nozzle parts; a gear unit including a ring gear that has a spiral groove formed in an inner circumferential surface thereof and engaged with the spiral protrusion of the second nozzle part and causes the second nozzle part to be moved forward and rearward in cooperation with rotation thereof; and a system block disposed between the front and rear valve bodies and having a through hole that is formed in the axial direction such that the second nozzle part is moved frontward and rearward relative to the blind plate through the through hole, and a slide groove that is formed in a front surface thereof such that the blind plate is guided to be moved horizontally along the slide groove, the system block being coupled to the valve body unit in an attachable and detachable manner.

Furthermore, the gear unit may include: a lever disposed at an upper end of the ring gear and protruding upward; and a gear bushing disposed on each of front and rear surfaces of the ring gear, and made of a different material from the ring gear such that a frictional force is reduced upon rotation of the ring gear and abrasion is prevented.

Furthermore, the rear valve body may include a mounting part provided at an upper end thereof and including a horizontal plate, a vertical plate, and an auxiliary vertical plate, and the gear unit may include: a traveling nut formed in a hexahedral shape, and having an insertion groove that is formed in a lower surface thereof such that an upper end of the lever is locked into the insertion groove, the traveling nut being configured to induce the ring gear to be rotated along a direction of horizontal movement of the traveling nut such that the second nozzle part is spaced apart from the blind plate or is hermetically sealed; an actuator provided in the mounting part by passing therethrough, and causing the travelling nut to be moved horizontally; and an indicator disposed on a front surface of the travelling nut, and indicating a movement position of the second nozzle part.

Furthermore, the system block may include: a guide protrusion protruding from each of inner upper and lower ends of the slide groove in a stepped shape and guiding movement of the gaskets when the blind plate is moved, the guide protrusion allowing the blind plate to be moved horizontally without causing interference of the gaskets; and a gear insertion hole formed in a rear surface of the system block such that the ring gear is inserted into the gear insertion hole.

Furthermore, the gear insertion hole may include a lever guide groove being open in an upper end portion thereof by a predetermined range and limiting a rotation angle of the ring gear, the lever guide groove guiding a moving direction of the lever.

Furthermore, the gear insertion hole may include a lever guide groove being open in an upper end portion thereof by a predetermined range and limiting a rotation angle of the ring gear, the lever guide groove guiding a moving direction of the lever.

### Advantageous Effects

The blind valve according to the embodiment of the present invention can enable an operator to quickly and safely close a pipe with less force without using a work tool.

Furthermore, due to a bolt-assembled structure of the blind valve, it is possible to easily disassemble the valve, thus replacing or repairing only a defective part when internal defects or abnormalities occur during use of the valve, and screw locking holes are formed at location close to the center of pressure inside a valve body unit. This makes it possible to reduce the amount of deformation of the valve body unit and a nozzle part, thus achieving improved structural stability.

Furthermore, a system block can be provided in close contact with front and rear valve bodies of the valve body unit due to structural and shape characteristics of the system block. This makes it possible to reduce the amount of deformation of the valve body unit and maintain the interval between the front and rear valve bodies, while simplifying an assembly structure of the valve by eliminating provision of unnecessary components.

Furthermore, when the blind plate is moved in a sliding manner by the system block, the blind plate can be efficiently moved horizontally without interference of gaskets. This makes it possible to easily change a position of an even large-sized blind plate.

Furthermore, gear bushings of different materials from a ring gear of a gear unit can be provided at opposite sides of the ring gear. This makes it possible to reduce frictional force during gear operation and prevent abrasion between homogeneous materials that may occur upon compression with a large force.

Furthermore, provision of gaskets for maintaining airtightness can be minimized, thus making it possible to use of a gasket suitable for high temperature and cryogenic fluid and enable easy replacement thereof.

Furthermore, the blind valve does not have an internal space that foreign substances penetrate into the valve and thus can be used for a pipe where sticking of foreign substances such as slurry or particles to the pipe wall may occur.

Furthermore, the gaskets provided in the blind plate can be visually ascertained and thus can be replaced without disassembly of the valve.

### Description of Drawings

- FIG. 1: is an exploded view showing a line blind valve according to the present invention;
- FIG. 2: is an assembled view showing the line blind valve according to the present invention;
- FIG. 3: is an enlarged view of a portion A of FIG. 2;
- FIG. 4: is a view showing a state in which a front valve body and a first nozzle part of the line blind valve according to the present invention are coupled to each other;
- FIG. 5: is a view showing a state in which a rear valve body and the second nozzle part of the line blind valve according to the present invention are coupled to each other.
- FIG. 6: is a view showing a configuration of a blind plate of the line blind valve according to the present invention;
- FIG. 7: is a view showing a configuration of a system block of the line blind valve according to the present invention;
- FIG. 8: illustrates views respectively showing a state in which the second nozzle part is brought into close contact with the blind plate of the line blind valve according to the present invention, and a state in which the second nozzle part is spaced apart from the blind plate.

### Best Mode

Hereinbelow, an exemplary embodiment of the present invention will be described in detail with reference to the accompanying drawings. In the following description, if it is decided that the detailed description of known functions or configurations related to the invention makes the subject matter of the invention unclear, the detailed description is omitted.

In addition, in the following description, it is to be understood that the terms indicating directions of the present invention are used to help those skilled in the art best understand the invention and to indicate relative directions and thus should not be construed as limiting the scope of the present invention.

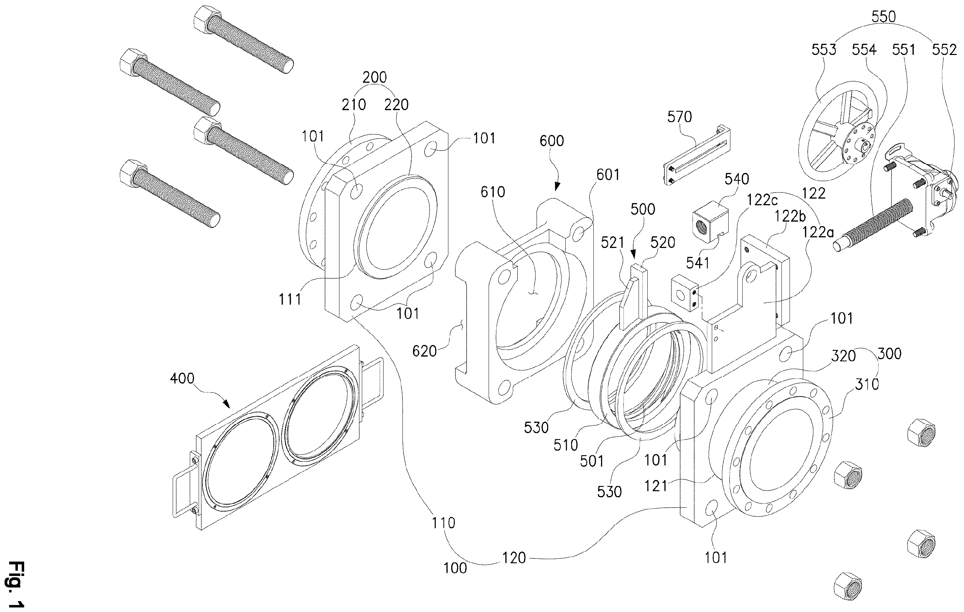

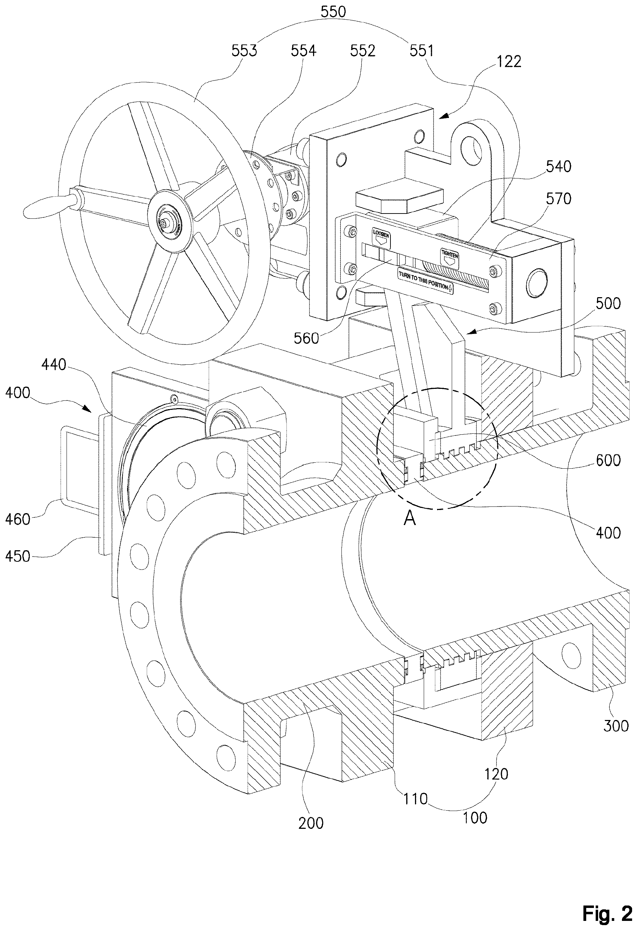

Referring to FIGS. 1 and 2, a blind valve according to an embodiment of the present invention includes a valve body unit 100, a first nozzle part 200, a second nozzle part 300, a blind plate 400, a gear unit 500, and a system block 600.

The valve body unit 100 includes two parts that are disposed between pipes at front and rear locations spaced apart from each other at a predetermined interval, with a first locking hole 101 formed in the boundary portion thereof.

Herein, the valve body unit 100 may include a front valve body 110 and a rear valve body 120. The front valve body 110 and the rear valve body 120 have a rectangular planar plate shape and are arranged vertically. The front and rear valve bodies 110 and 120 respectively have a first insertion opening 111 and a second insertion opening 121 that are formed in the centers thereof. The rear valve body 120 is disposed rearward of the front valve body 110 at a location spaced apart therefrom at a predetermined interval. At this time, the first insertion opening 111 and the second insertion opening 121 are coaxially aligned with each other. The first nozzle part 200 and the second nozzle part 300 are respectively disposed in the first and second insertion openings to form a flow path.

Multiple first locking holes 101 are formed in the boundary portion of each of the front valve body 110 and the rear valve body 120. Each of the first locking holes is coupled to a second locking hole 601 of the system block 600 that will be described later by a bolt. In particular, the first locking holes 101 are formed in the boundary portions of the front and rear valve bodies at locations close to the first and second insertion openings 111 and 121 that are centers of pressure inside the valve body unit. This makes it possible to reduce the amount of deformation of the valve body unit 100, thus enabling a robust and safe design. Meanwhile, the rear valve body 120 is provided at an upper end thereof with a mounting part 122 to which the gear unit 500 is fastened. The mounting part 122 includes a horizontal plate 122a, a vertical plate 122b, and an auxiliary vertical plate 122c. In detail, the mounting part 122 is structured such that the horizontal plate 122a is disposed horizontally and stands up vertically at the upper end of the rear valve body 120, and the vertical plate 122b and the auxiliary plate 122b are provided on first and second side surfaces of the horizontal plate 122a, respectively, at locations positioned at right angles to the horizontal plate 122a.

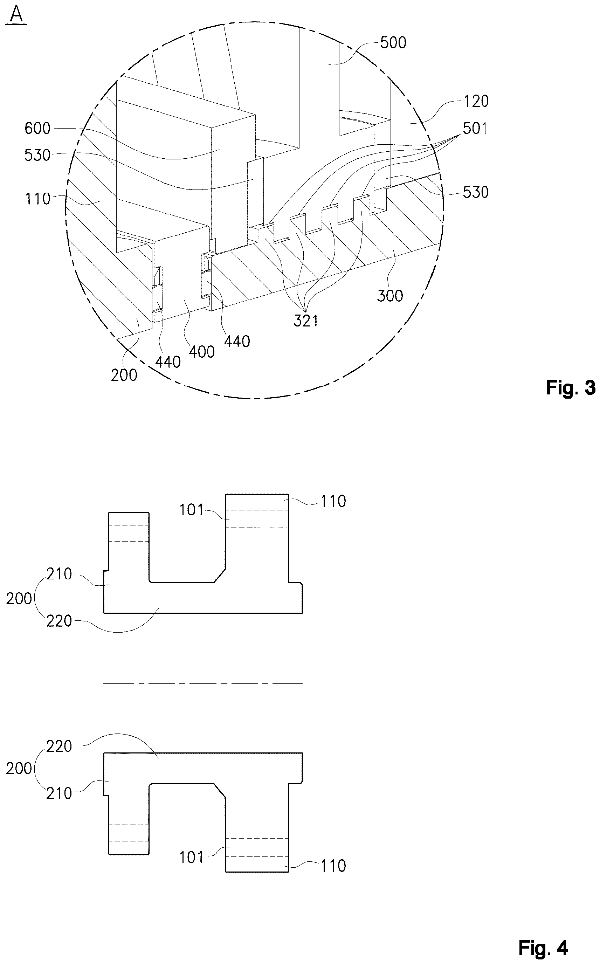

As shown in FIGS. 3 and 4, the first nozzle part 200 is insertably fastened to the front valve body 110 by passing therethrough and includes a first flange 210 and a first pipe 220. At this time, it is preferable that the first flange 210 is provided in the same size as an associated pipe coupled to the first flange 210. The first pipe 220 protrudes rearward from the front valve body 110 by a predetermined distance. Herein, a rear end of the protruded first pipe 220 is in contact with a front surface of the blind plate 400 and is hermetically sealed by a gasket 440.

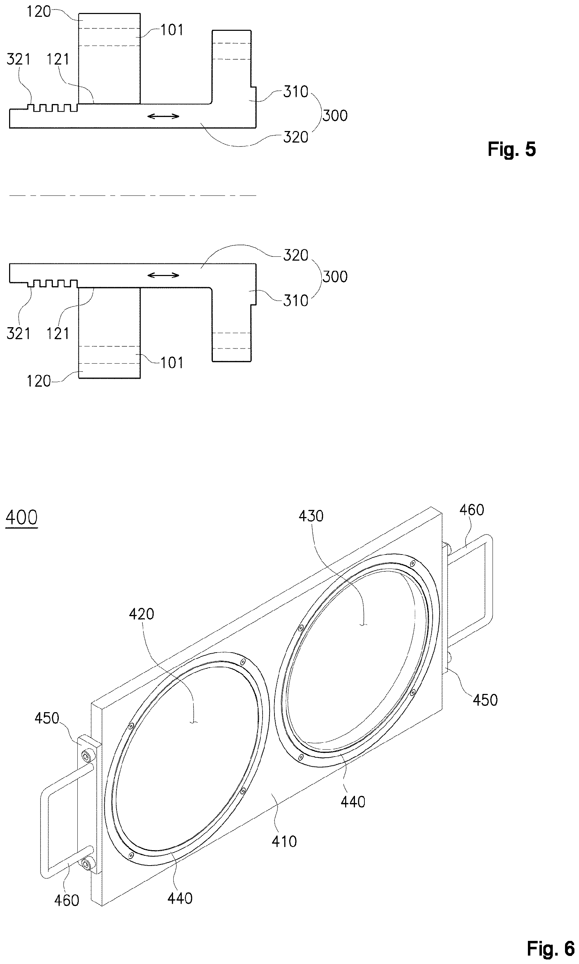

As shown in FIGS. 3 and 5, the second nozzle part 300 is inserted into the rear valve body 120 by passing therethrough and has a spiral protrusion 321 formed on the outer circumferential surface thereof. The second nozzle part is configure to be movable frontward and rearward in the axial direction. Herein, the second nozzle part 300 includes a second flange 310 and a second pipe 320. It is preferable that the second flange 310 is provided in the same size as an associated pipe coupled to the second flange 310. The second pipe 320 protrudes forward from the rear valve body 120 by a predetermined distance and has the spiral protrusion 321 formed on the outer circumferential surface in a direction from a front end of the second pipe 320 to a predetermined distance. At this time, the front end of the protruded second pipe 320 is in contact with a rear surface of the blind plate 400 and is hermetically sealed by a gasket 440.

The second nozzle part 300 is moved frontward and rearward in the axial direction when a spiral groove of the gear unit 500 and the spiral protrusion 321 are rotated in meshed engagement with each other.

The second nozzle part 300 is brought into close contact with or spaced apart from the blind plate 400 in response to a driving direction of the gear unit 500, causing the blind plate 400 to be fixed or moved.

Referring to FIGS. 3 and 6, the blind plate 400 is configured to open or close a pipe by horizontal movement thereof. The blind plate is disposed between the first nozzle part 200 and the second nozzle part 300. The blind plate is inserted into a front end of the system block 600 and is horizontally moved in a sliding manner.

The blind plate 400 includes a plate 410, a closed hole 420, an open hole 430, a gasket 440, a blind stopper 450, and a handle 460.

The plate 410 is formed as a rectangular planar plate and is disposed horizontally and stands up vertically.

The closed hole 420 is formed at a side of the plate 410 to close the flow path of the line blind valve.

The open hole 430 is formed in a second side of the plate 410 at a location horizontally adjacent to the closed hole 420.

The gasket 440 is disposed on each surface of the plate 410 where each of the front valve body 110 and the rear valve body 120 is in contact therewith. The gasket is provided in each of the closed hole 420 and the open hole 430. The gaskets 440 can be visually checked for damage through detachment of the blind plate 400 and can be replaced with ease without disassembly of the line blind valve.

The blind stopper 450 is formed as a rectangular planar plate. The blind stopper is disposed at each end of the plate 410 and protrudes forward. The blind stopper 450 causes the closed hole 420 or the open hole 430 to be located at a predetermined point inside the line blind valve when the blind plate 400 is moved.

The handle 460 is disposed on an outer surface of each of the blind stoppers 450. Herein, it is preferable that the handle is provided to be easily pushed or pulled by a user who wants to change a position of the blind plate 400.

Referring to FIGS. 1 and 2, the gear unit 500 causes the second nozzle part 300 to be moved frontward and rearward in cooperation with rotation thereof.

The gear unit 500 includes a ring gear 510, a lever 520, a gear bushing 530, a traveling nut 540, an actuator 550, an indicator 560, and an indicator guide plate 570.

The ring gear 510 is disposed at a rear end of the system block 600 and is formed into an annular ring shape. The ring gear has the spiral groove 501 formed in the inner circumferential surface thereof and engaged with the spiral protrusion 321.

The lever 520 is disposed at the upper outer circumferential surface of the ring gear 510 and protrudes upward. At this time, the lever 520 may be formed to have the same width as the thickness of the ring gear 510. The lever has a vertical plate shape and is disposed in the axial direction. Furthermore, a reinforcing plate 521 may be provided at a side of the lever 520 at a location positioned at a right angle to the lever 520.

The gear bushing 530 is formed as a pair of gear bushings. The pair of gear bushings are disposed on front and rear surfaces of the ring gear 510, respectively. At this time, the ring gear 510 and the gear bushings 530 disposed frontward and rearward of the ring gear are inserted into a rear surface of the system block 600. At this time, it is preferable that the gear bushings 530 are formed in a ring shape having the same inner and outer diameters as the ring gear 510. The gear bushings 530 are made of a different material from the ring gear 510. This makes it possible to reduce a frictional force is reduced upon rotation of the ring gear 510 and prevent abrasion between homogeneous materials that may occur upon compression with a large force.

The traveling nut 540 is formed in a hexahedral shape. The traveling nut has an insertion groove 541 formed in a lower surface thereof such that an upper end of the lever 520 is locked into the insertion groove. The traveling nut 540 induces the ring gear 510 to be rotated along a direction of horizontal movement of the traveling nut such that the second nozzle part 300 is spaced apart from the blind plate 400 or is hermetically sealed.

The actuator 550 is provided in the mounting part 122 of the rear valve body 120. The driving actuator 550 causes the traveling nut 540 to be moved horizontally such that the lever 520 locked to the lower surface of the traveling nut 540 is moved to rotate the ring gear 510.

The actuator 550 includes a worm 551, a worm gear 552, a handwheel 553, and a locking plate 554. The worm 551 is disposed horizontally by passing through the vertical plate 122b and the auxiliary vertical plate 122c of the mounting part122 at a location positioned at a right angle to the worm gear 552. The worm is rotated in meshed engagement with the worm gear. At this time, the worm gear 552 is provided on an outer surface of the vertical plate 122b of the mounting part 122. The worm gear is vertically meshed with the worm 551 and transmits power thereto. Furthermore, the handwheel 553 is connected to the front side of the worm gear 552. When the handwheel 553 is rotated by a user's manipulation, a rotational force is transmitted to the worm gear 552. The locking plate 554 has multiple locking holes formed therein. A pair of locking plates 554 are symmetrically disposed between the handwheel 553 and the worm gear 552. One of the locking plates 554 disposed in a frontward position is coupled to the handwheel 553 and is rotated in cooperation with rotation of the handwheel. A remaining one of the locking plates 554 disposed in a rearward position is coupled to the worm gear 552. At this time, the locking plate 554 is coupled to the handwheel 553 by fastening a handwheel lock device to the locking holes of the locking plate 554. This makes it possible to prevent undesired rotation of the handwheel 553 and prevent an unauthorized person from attempting to operate the handwheel.

The indicator 560 protrudes from a front surface of the traveling nut 540 and functions to indicate a movement position of the second nozzle part 300.

The indicator guide plate 570 is disposed frontward of the mounting part 122. The indicator guide plate has an indicator guide groove formed therein such that movement of the indicator 560 is visually ascertained while being guided by the indicator guide groove. It is preferable that a marker indicating a movement position of the second nozzle part 300 is displayed on the indicator guide plate 570.

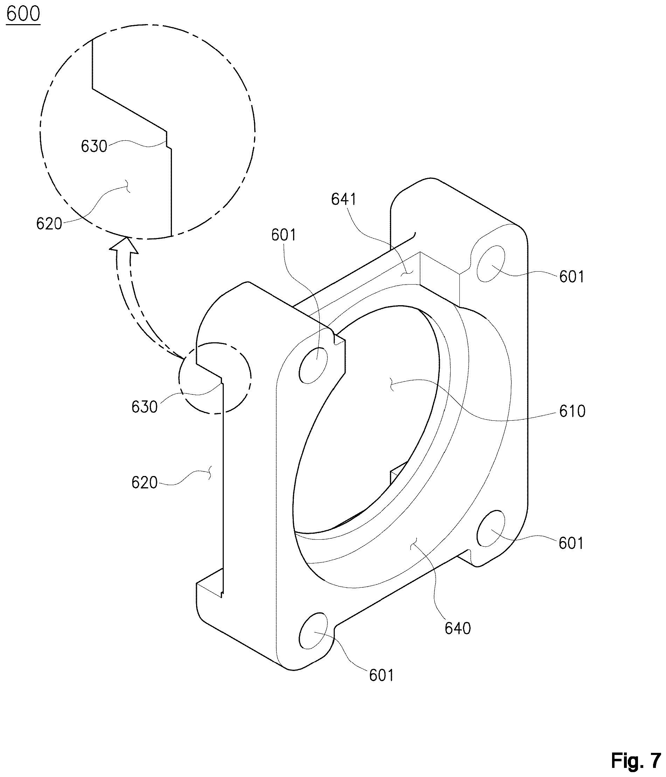

Referring to FIGS. 1 to 3 and 7, the system block 600 has a hexahedral shape and has multiple second locking holes 601 formed correspondingly to the first locking holes 101 of the valve body unit 100 and coupled thereto by bolts.

Due to the fact that the system block 600 is fastened to the valve body unit 100 by bolts, the system block can be provided and used in pipes that are not aligned with each other.

Furthermore, the system block 600 has a through hole 610 formed in the center thereof in the axial direction and coaxially aligned with the first and second insertion holes 111 and 121 of the front and rear valve bodies 110 and 120. At this time, the second nozzle part 300 is moved frontward and rearward relative to the blind plate 400 through the through hole 610, and the blind plate 400 is guided to be horizontally moved in a sliding manner along the slide groove 620 formed in the front surface of the system block. Due to such sliding movement of the blind plate 400 along the slide groove 620, it is possible to change the position of an even large-sized blind plate 400 provided in a large diameter pipe.

Furthermore, the system block 600 is provided in close contact with the inner surfaces of the front valve body 110 and the rear valve body 120. This makes it possible to reduce the amount of deformation of the valve body 100 and maintain the interval between the front valve body 110 and the rear valve body 120. In addition, due to the fact that the system block is provided in close contact with the inner surfaces of the front valve body 110 and the rear valve body 120, stress is dispersed, thus reducing the amount of deformation of the valve body unit 100. This makes it possible to enable use in high-temperature and high-pressure conditions.

The system block 600 may further include a guide protrusion 630 and a gear insertion hole 640. The guide protrusion 630 protrudes from each of inner upper and lower ends of the slide groove 620 in a stepped shape. The guide protrusion guides movement of the gaskets 440 when the blind plate 400 is moved and allows the blind plate 400 to be efficiently moved horizontally without causing interference of the gaskets 440. The gear insertion hole 640 is formed in a rear surface of the system block 600 such that the gear unit 500 is rotatably inserted into the gear insertion hole. The gear insertion hole 640 has a lever guide groove 641 that is open in an upper end portion thereof and functions to guide movement of the lever 520 for rotation of the gear unit 500.

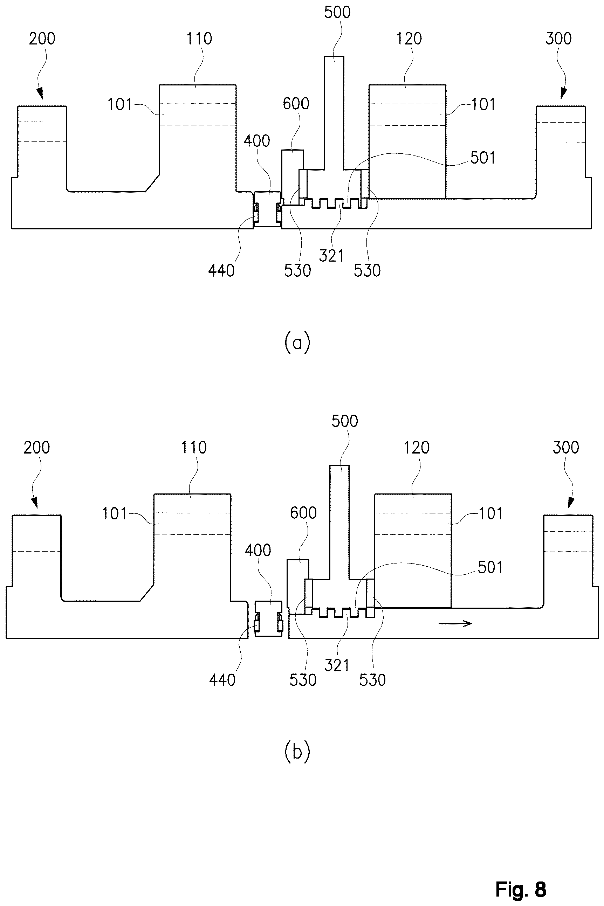

FIG. 8a is a view showing a state in which the second nozzle part is brought into close contact with the blind plate, and FIG. 8b is a view showing a state in which the second nozzle part is spaced apart from the blind plate.

As shown in FIG. 8, the blind valve according to the present invention employs a method in which the second nozzle part 300, which is a variable portion, is moved in the axial direction to compress and seal the front and rear surfaces of the blind plate 400. Therefore, the present inventions require no provision of an internal gasket in addition to the gaskets of the blind plate 400, thus being simple in structure. Due to such a simple structure, it is possible to prevent penetration of foreign substances, thus enabling use in a pipe where sticking of foreign substances such as slurry or particles to the pipe wall may occur.

As described above, embodiments of the present invention seek to simplify an assembly structure of the line blind valve by eliminating provision of unnecessary components, and to reduce the amount of deformation, providing a wide operating temperature and pressure range, and improving structural stability through provision of a system block. Although the exemplary embodiment of the present invention has been disclosed for illustrative purposes, those skilled in the art will appreciate that various modifications, additions and substitutions are possible, without departing from the scope of the invention as disclosed in the accompanying claims. Therefore, the scope of the invention should be determined on the basis of the appended claims.

## Claims

1. A blind valve, comprising:
a valve body unit (100) including a front valve body (110) and a rear valve body (120) that are configured to be disposed between pipes (220, 320) at front and rear locations spaced apart from each other at a predetermined interval and are fastened together by using a bolt;
a first nozzle part (200) fastened to the front valve body (110);
a second nozzle part (300) inserted into the rear valve body (110) by passing therethrough and having a spiral protrusion (321) formed on an outer circumferential surface thereof, the second nozzle part (300) being configured to be movable frontward and rearward in an axial direction;
a blind plate (400) disposed between the first and second nozzle parts (200, 300) and configured to open and close the pipes (220, 320) by horizontal movement thereof, the blind plate (400) having a gasket (440) provided in a surface thereof that is in contact with each of the first and second nozzle parts (200, 300);
a gear unit (500) including a ring gear (510) that has a spiral groove (501) formed in an inner circumferential surface thereof and engaged with the spiral protrusion (321) of the second nozzle part (300) and causes the second nozzle part (300) to be moved forward and rearward in cooperation with rotation thereof; and **characterized in that**
a system block (600) is disposed between the front and rear valve bodies (110, 120) and having a through hole (610) that is formed in the axial direction such that the second nozzle part (300) is moved frontward and rearward relative to the blind plate (400) through the through hole (610), and a slide groove (620) that is formed in a front surface thereof such that the blind plate (400) is guided to be moved horizontally along the slide groove (620), the system block (600) being coupled to the valve body unit (100) in an attachable and detachable manner.

2. The blind valve of claim 1, wherein the gear unit (500) includes:
a lever (520) disposed at an upper end of the ring gear (510) and protruding upward; and
a gear bushing (530) disposed on each of front and rear surfaces of the ring gear (510), and made of a different material from the ring gear (510) such that a frictional force is reduced upon rotation of the ring gear (510) and abrasion is prevented.

3. The blind valve of claim 1, wherein the rear valve body (120) includes a mounting part (122) provided at an upper end thereof and including a horizontal plate (122a), a vertical plate (122b), and an auxiliary vertical plate (122c), and the gear unit (500) includes:
a traveling nut (540) formed in a hexahedral shape, and having an insertion groove (541) that is formed in a lower surface thereof such that an upper end of the lever (520) is locked into the insertion groove (541), the traveling nut (540) being configured to induce the ring gear (510) to be rotated along a direction of horizontal movement of the traveling nut (540) such that the second nozzle part (300) is spaced apart from the blind plate (400) or is hermetically sealed;
an actuator (550) provided in the mounting part (122) by passing therethrough, and causing the traveling nut (540) to be moved horizontally; and
an indicator (560) disposed on a front surface of the traveling nut (540), and indicating a movement position of the second nozzle part (300).

4. The blind valve of claim 1, wherein the system block (600) includes:
a guide protrusion (630) protruding from each of inner upper and lower ends of the slide groove (620) in a stepped shape and guiding movement of the gaskets (440) when the blind plate (400) is moved, the guide protrusion (630) allowing the blind plate (400) to be moved horizontally without causing interference of the gaskets (440); and
a gear insertion hole (640) formed in a rear surface of the system block (600) such that the ring gear (510) is inserted into the gear insertion hole (640).

5. The blind valve of claim 4, wherein the gear insertion hole (640) includes:
a lever guide groove (641) being open in an upper end portion thereof by a predetermined range and limiting a rotation angle of the ring gear (510), the lever guide groove (641) guiding movement of the lever (520).

## Patentansprüche

1. Blindventil, umfassend:
eine Ventilkörpereinheit (100), die einen vorderen Ventilkörper (110) und einen hinteren Ventilkörper (120) enthält, die dazu konfiguriert sind, zwischen Rohren (220, 320) an einer vorderen und einer hinteren Stelle, die voneinander beabstandet sind, in einem vorbestimmten Abstand angeordnet zu sein, und unter Verwendung eines Bolzens aneinander befestigt sind;
ein erstes Düsenteil (200), das an dem vorderen Ventilkörper (110) befestigt ist;
ein zweites Düsenteil (300), das in den hinteren Ventilkörper (110) durch Durchführen dadurch eingesetzt ist und einen spiralförmigen Vorsprung (321) aufweist, der an einer äußeren Umfangsfläche davon ausgebildet ist, wobei das zweite Düsenteil (300) dazu konfiguriert ist, nach vorne und nach hinten in einer axialen Richtung beweglich zu sein;
eine Blindplatte (400), die zwischen dem ersten und dem zweiten Düsenteil (200, 300) angeordnet und dazu konfiguriert ist, die Rohre (220, 320) durch eine horizontale Bewegung davon zu öffnen und zu schließen, wobei die Blindplatte (400) eine Dichtung (440) aufweist, die in einer Oberfläche davon, die mit jedem von dem ersten und dem zweiten Düsenteil (200, 300) in Kontakt ist, bereitgestellt ist;
eine Zahnradeinheit (500), die ein Hohlrad (510) enthält, das eine spiralförmige Nut (501) aufweist, die in einer inneren Umfangsfläche davon ausgebildet ist und mit dem spiralförmigen Vorsprung (321) des zweiten Düsenteils (300) in Eingriff steht und bewirkt, dass das zweite Düsenteil (300) in Zusammenwirkung mit dessen Drehung vorwärts und rückwärts bewegt wird; und **dadurch gekennzeichnet, dass**
ein Systemblock (600) zwischen dem vorderen und dem hinteren Ventilkörper (110, 120) angeordnet ist und ein Durchgangsloch (610) aufweist, das in der axialen Richtung so ausgebildet ist, dass das zweite Düsenteil (300) vorwärts und rückwärts relativ zu der Blindplatte (400) durch das Durchgangsloch (610) bewegt wird, und eine Gleitnut ( 620) aufweist, die in einer vorderen Oberfläche davon so ausgebildet ist, dass die Blindplatte (400) geführt wird, um horizontal entlang der Gleitnut (620) bewegt zu werden, wobei der Systemblock (600) mit der Ventilkörpereinheit (100) anbringbar und abnehmbar gekoppelt ist.

2. Blindventil nach Anspruch 1, wobei die Zahnradeinheit (500) Folgendes enthält:
einen Hebel (520), der an einem oberen Ende des Hohlrads (510) angeordnet ist und nach oben vorsteht; und
eine Zahnradbuchse (530), die an jeder von der vorderen und der hinteren Oberfläche des Hohlrads (510) angeordnet ist und aus einem anderen Material als das Hohlrad (510) hergestellt ist, so dass eine Reibungskraft bei Drehung des Hohlrads (510) verringert wird und Abrieb verhindert wird.

3. Blindventil nach Anspruch 1, wobei der hintere Ventilkörper (120) ein Montageteil (122) enthält, das an einem oberen Ende davon bereitgestellt ist und eine horizontale Platte (122a), eine vertikale Platte (122b) und eine vertikale Hilfsplatte (122c) enthält, und die Zahnradeinheit (500) Folgendes enthält:
eine Laufmutter (540), die in einer sechsflächigen Form ausgebildet ist und eine Einführnut (541) aufweist, die in einer unteren Oberfläche davon so ausgebildet ist, dass ein oberes Ende des Hebels (520) in der Einführnut (541) verriegelt ist, wobei die Laufmutter (540) dazu konfiguriert ist, auszulösen, dass das Hohlrad (510) entlang einer Richtung einer horizontalen Bewegung der Laufmutter (540) gedreht wird, so dass das zweite Düsenteil (300) von der Blindplatte (400) beabstandet ist oder hermetisch abgedichtet ist;
einen Aktuator (550), der in dem Montageteil (122) durch Durchführen dadurch bereitgestellt ist, und der bewirkt, dass die Laufmutter (540) horizontal bewegt wird; und
einen Anzeiger (560), der an einer vorderen Oberfläche der Laufmutter (540) angeordnet ist und
eine Bewegungsposition des zweiten Düsenteils (300) angibt.

4. Blindventil nach Anspruch 1, wobei der Systemblock (600) Folgendes enthält:
einen Führungsvorsprung (630), der von jedem von dem inneren oberen und unteren Ende der Gleitnut (620) in einer abgestuften Form vorsteht und eine Bewegung der Dichtungen (440) führt, wenn die Blindplatte (400) bewegt wird, wobei der Führungsvorsprung (630) ermöglicht, dass die Blindplatte (400) horizontal bewegt wird, ohne eine Beeinträchtigung der Dichtungen (440) zu verursachen; und
ein Zahnradeinführloch (640), das in einer hinteren Oberfläche des Systemblocks (600) derart ausgebildet ist, dass das Hohlrad (510) in das Zahnradeinführloch (640) eingeführt wird.

5. Blindventil nach Anspruch 4, wobei das Zahnradeinführloch (640) Folgendes enthält:
eine Hebelführungsnut (641), die in einem oberen Endabschnitt davon in einem vorbestimmten Bereich offen ist und einen Drehwinkel des Hohlrads (510) begrenzt, wobei die Hebelführungsnut (641) eine Bewegung des Hebels (520) führt.

## Revendications

1. Robinet à obturateur, comprenant :
une unité de corps de robinet (100) comprenant un corps de robinet avant (110) et un corps de robinet arrière (120) qui sont conçus pour être disposés entre des tuyaux (220, 320) au niveau des emplacements avant et arrière espacés les uns des autres à un intervalle prédéfini et sont fixés ensemble à l'aide d'un boulon ;
une première partie de buse (200) fixée au corps de robinet avant (110) ;
une seconde partie de buse (300) insérée dans le corps de robinet arrière (110) en passant à travers celui-ci et possédant une saillie en spirale (321) formée sur une surface circonférentielle externe de celle-ci, la seconde partie de buse (300) étant conçue pour être mobile vers l'avant et vers l'arrière dans une direction axiale ;
une plaque à obturateur (400) disposée entre les première et seconde parties de buse (200, 300) et conçue pour ouvrir et fermer les tuyaux (220, 320) par un mouvement horizontal de celle-ci, la plaque à obturateur (400) possédant un joint (440) prévu dans une surface de celle-ci qui est en contact avec chacune des première et seconde parties de buse (200, 300) ;
une unité d'engrenage (500) comprenant une couronne (510) qui possède une rainure en spirale (501) formée dans une surface circonférentielle interne de celle-ci et en prise avec la saillie en spirale (321) de la seconde partie de buse (300) et entraîne le déplacement de la seconde partie de buse (300) vers l'avant et vers l'arrière en coopération avec la rotation de celle-ci ; et **caractérisé en ce que**
un bloc système (600) est disposé entre les corps de robinet avant et arrière (110, 120) et possédant un trou traversant (610) qui est formé dans la direction axiale de sorte que la seconde partie de buse (300) soit déplacée vers l'avant et vers l'arrière par rapport à la plaque à obturateur (400) à travers le trou traversant (610), et une rainure de coulissement (620) qui est formée dans une surface avant de celui-ci de sorte que la plaque à obturateur (400) soit guidée pour être déplacée horizontalement le long de la rainure de coulissement (620), le bloc système (600) étant couplé à l'unité de corps de robinet (100) de manière à pouvoir être attaché et détaché.

2. Robinet à obturateur selon la revendication 1, ladite unité d'engrenage (500) comprenant :
un levier (520) disposé au niveau d'une extrémité supérieure de la couronne (510) et faisant saillie vers le haut ; et
une douille d'engrenage (530) disposée sur chacune des surfaces avant et arrière de la couronne (510), et constituée d'un matériau différent de la couronne (510) de sorte qu'une force de frottement soit réduite lors de la rotation de la couronne (510) et que l'abrasion soit limitée.

3. Robinet à obturateur selon la revendication 1, ledit corps de robinet arrière (120) comprenant une partie de montage (122) prévue au niveau d'une extrémité supérieure de celui-ci et comprenant une plaque horizontale (122a), une plaque verticale (122b) et une plaque verticale auxiliaire (122c), et ladite unité d'engrenage (500) comprenant :
un écrou mobile (540) formé dans une forme hexaédrique, et possédant une rainure d'insertion (541) qui est formée dans une surface inférieure de celui-ci de sorte qu'une extrémité supérieure du levier (520) soit verrouillée dans la rainure d'insertion (541), l'écrou mobile (540) étant conçu pour induire la rotation de la couronne (510) le long d'une direction de mouvement horizontal de l'écrou mobile (540) de sorte que la seconde partie de buse (300) soit espacée de la plaque à obturateur (400) ou soit hermétiquement scellée ;
un actionneur (550) prévu dans la partie de montage (122) en passant à travers celle-ci, et entraînant le déplacement horizontal de l'écrou mobile (540) ; et
un indicateur (560) disposé sur une surface avant de l'écrou mobile (540), et indiquant une position de mouvement de la seconde partie de buse (300).

4. Robinet à obturateur selon la revendication 1, ledit bloc système (600) comprenant :
une saillie de guidage (630) faisant saillie à partir de chacune des extrémités supérieure et inférieure internes de la rainure de coulissement (620) en une forme étagée et guidant le mouvement des joints (440) lorsque la plaque à obturateur (400) est déplacée, ladite saillie de guidage (630) permettant à la plaque à obturateur (400) d'être déplacée horizontalement sans entraîner d'interférence des joints (440) ; et
un trou d'insertion d'engrenage (640) formé dans une surface arrière du bloc système (600) de sorte que la couronne (510) soit insérée dans le trou d'insertion d'engrenage (640).

5. Robinet à obturateur selon la revendication 4, ledit trou d'insertion d'engrenage (640) comprenant :
une rainure de guidage (641) de levier qui est ouverte dans une partie d'extrémité supérieure de celle-ci sur une plage prédéfinie et limite un angle de rotation de la couronne (510), la rainure de guidage (641) de levier guidant le mouvement du levier (520).
